(19) **Europäisches Patentamt European Patent Office Office européen des brevets**

(11) **EP 2 503 817 A1**

(12) **EUROPEAN PATENT APPLICATION**
published in accordance with Art. 153(4) EPC

(43) Date of publication:
**26.09.2012 Bulletin 2012/39**

(21) Application number: **10831514.4**

(22) Date of filing: **12.11.2010**

(51) Int Cl.:
***H04W 24/08*** (2009.01)    ***H04B 1/707*** (2011.01)
***H04W 88/08*** (2009.01)

(86) International application number:
**PCT/JP2010/070201**

(87) International publication number:
**WO 2011/062119 (26.05.2011 Gazette 2011/21)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **18.11.2009 JP 2009263207**

(71) Applicant: **NTT DOCOMO, INC.**
**Chiyoda-ku**
**Tokyo**
**100-6150 (JP)**

(72) Inventors:
• **OKUBO, Naoto**
  **Tokyo 100-6150 (JP)**
• **KIYOSHIMA, Kohei**
  **Tokyo 100-6150 (JP)**
• **ISHII, Hiroyuki**
  **Tokyo 100-6150 (JP)**
• **KAWAMURA, Teruo**
  **Tokyo 100-6150 (JP)**

(74) Representative: **HOFFMANN EITLE**
**Patent- und Rechtsanwälte**
**Arabellastrasse 4**
**81925 München (DE)**

(54) **WIRELESS BASE STATION**

(57) A reception quality in a radio base station eNB is estimated with a high accuracy by using a reference signal. The radio base station eNB according to the present invention includes signal power estimation units 11B, 12B, and 13B configured to calculate a correlation value Z(a) between a predetermined number N of continuous samples "a" to "a+N-1" in sequences constituting a transmitted signal $X_L(n)$ of a predetermined signal transmitted by a mobile station UE#L and a predetermined number N of continuous samples "a" to "a+N-1" in sequences constituting a received signal r(n) of the predetermined signal in the radio base station eNB, and calculate received power $S_{power}$ of the predetermined signal using the correlation value Z(a).

FIG. 2

EP 2 503 817 A1

**Description**

TECHNICAL FIELD

The present invention relates to a radio base station.

BACKGROUND ART

In a mobile communication system employing an LTE (Long Term Evolution) scheme, RS (Reference Signal) transmitted in an uplink includes a CAZAC sequence.

The LTE mobile communication system is configured such that a radio base station eNB estimates the reception quality (for example, SIR (Signal to Interference Ratio)) in the radio base station eNB using a received reference signal, and performs a predetermined control process using the estimated SIR.

However, in the LTE scheme, there is a problem that the specification as to how the SIR should be estimated in the radio base station eNB has not been made.

SUMMARY OF THE INVENTION

Therefore, the present invention has been achieved in view of the above-described problems, and an object thereof is to provide a radio base station capable of estimating the reception quality in a radio base station eNB with a high accuracy by using a reference signal.

BRIEF DESCRIPTION OF THE DRAWINGS

[Fig. 1] Fig. 1 is a diagram showing the entire configuration of a mobile communication system according to a first embodiment of the present invention.

[Fig. 2] Fig. 2 is a functional block diagram of a radio base station according to the first embodiment of the present invention.

[Fig. 3] Fig. 3 is a flowchart illustrating the operation of the radio base station according to the first embodiment of the present invention.

[Fig. 4] Fig. 4 is a flowchart illustrating a signal power estimation operation of the radio base station according to the first embodiment of the present invention.

[Fig. 5] Fig. 5 is a flowchart illustrating an interference power estimation operation of the radio base station according to the first embodiment of the present invention.

BEST MODES FOR CARRYING OUT THE INVENTION

(Configuration of mobile communication system according to first embodiment of the present invention)

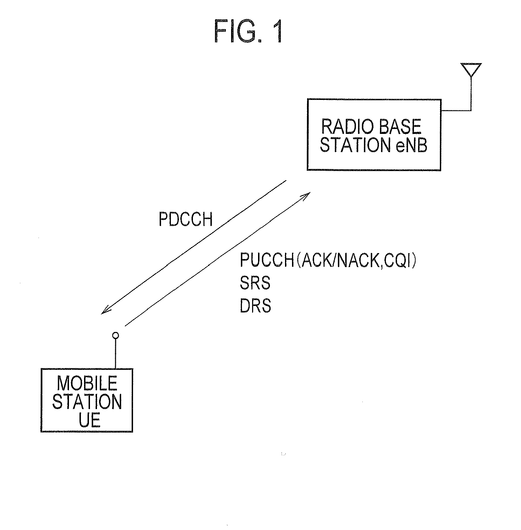

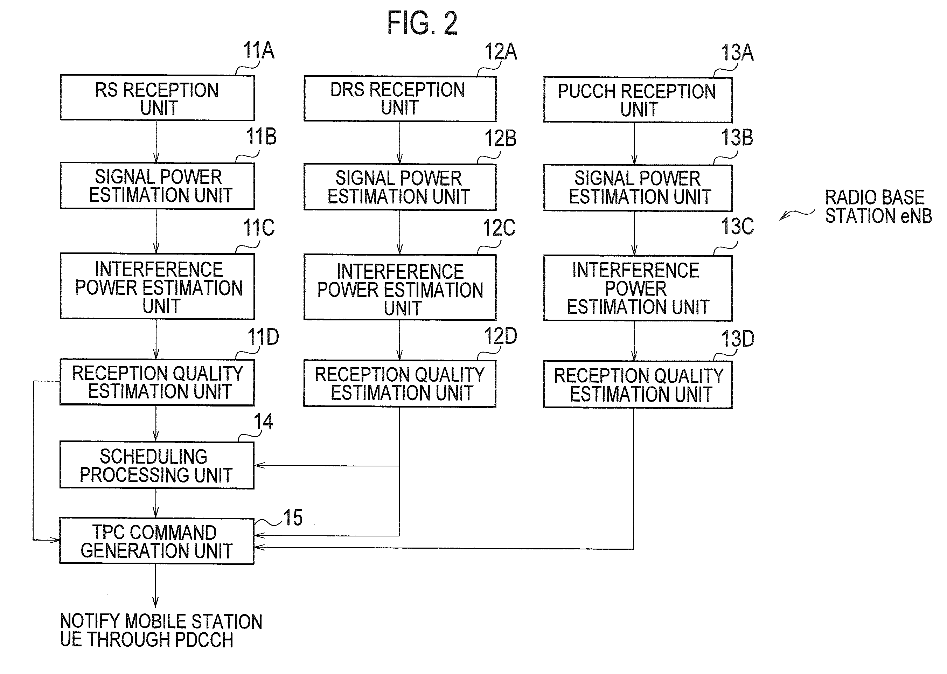

With reference to Fig. 1 and Fig. 2, the configuration of a mobile communication system according to a first embodiment of the present invention will be described.

The mobile communication system according to the present embodiment is an LTE mobile communication system, and includes a radio base station eNB and a mobile station UE as illustrated in Fig. 1.

As illustrated in Fig. 1, in an uplink, the mobile station UE is configured to transmit SRS (Sounding Reference Signal), DRS (Demodulation Reference Signal) and the like as a physical signal.

Here, the SRS is a reference signal used, by the radio base station eNB, for measuring the reception quality of the uplink, measuring a timing between the radio base station eNB and the mobile station UE, and the like.

In addition, the SRS is periodically transmitted independent of an uplink data signal which is transmitted through PUSCH (Physical Uplink Shared Channel), or an uplink control signal which is transmitted through PUCCH (Physical Uplink Control Channel).

Furthermore, the DRS is a demodulation reference signal which is time-multiplexed to the PUSCH or the PUCCH.

Furthermore, in the uplink, the mobile station UE is configured to transmit, via PUCCH, as an uplink control signal, transmission acknowledgement information (ACK/NACK) for a downlink data signal transmitted through PDSCH (Physical Downlink Shared Channel), downlink reception quality (CQI: Channel Quality Indicator), and the like.

Here, the above-mentioned SRS, DRS, or uplink control signal is a predetermined signal formed using a CAZAC (Constant Amplitude Zero Auto-Correlation) sequence which is a predetermined sequence having a constant amplitude on a time domain and a frequency domain and a self-correlation of 0.

Here, by performing a cyclic shift with respect to the CAZAC sequence, it is possible to generate a plurality of orthogonal sequences. That is, when the maximum number to be multiplexed by the cyclic shift is "$N_{MAX}$", the CAZAC sequence has a characteristic that a correlation value among arbitrary K samples constituting two different sequences generated through the cyclic shift is "0".

In general, if the sequence length of the CAZAC sequence is "M", when sequences are generated by performing the cyclic shift by one sample, it is possible to generate M sequences at maximum.

However, in a multipath fading environment, since it is not possible to determine a cyclic shift amount used for generating a sequence due to the influence of a delayed wave, it is necessary to decide a cyclic shift amount with a value larger than the maximum delay amount of a multipath.

Furthermore, when many sequences are obtained by reducing the cyclic shift amount, since inter-code interference is increased by an increase in the number of multiplexed codes, the accuracy of signal separation is reduced.

Therefore, the cyclic shift amount is decided in consideration of the influence of the delayed way and the inter-code interference, and the number of sequences generated using the cyclic shift amount corresponds to the maximum number of multipliable sequences "$N_{MAX}$". Here, the "$N_{MAX}$" satisfies a relation of "$N_{MAX} \leq M$".

The mobile communication system according to the present embodiment, for example, is configured to use a Zadoff-Chu sequence, a binary sequence based on Computer search, and the like as the CAZAC sequence.

Furthermore, in a downlink, the radio base station eNB is configured to transmit a downlink control signal including a scheduling signal, a transmission power control signal (a TPC (Transmission Power Control) command) and the like through PDCCH (Physical Downlink Control Channel).

As illustrated in Fig. 2, the radio base station eNB includes a SRS reception unit 11A, a signal power estimation unit 11B, an interference power estimation unit 11C, a reception quality estimation unit 11D, a DRS reception unit 12A, a signal power estimation unit 12B, an interference power estimation unit 12C, a reception quality estimation unit 12D, a PUCCH reception unit 13A, a signal power estimation unit 13B, an interference power estimation unit 13C, a reception quality estimation unit 13D, a scheduling processing unit 14, and a TPC command generation unit 15.

The SRS reception unit 11A is configured to receive the SRS periodically transmitted by the mobile station UE.

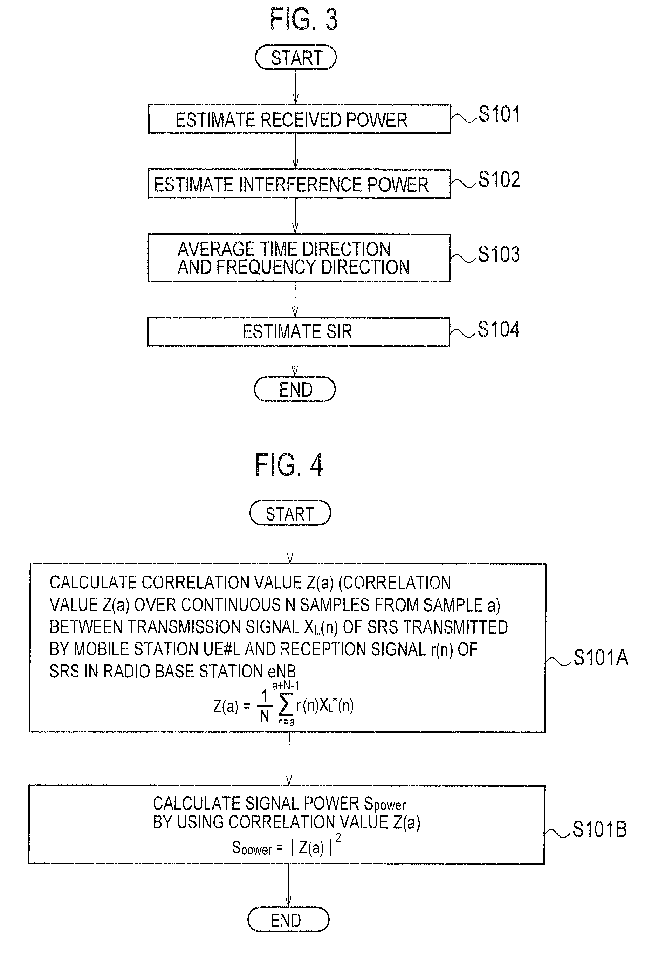

The signal power estimation unit 11B, for example, is configured to calculate the received power $S_{power}$ of the SRS transmitted by the mobile station UE by using a method illustrated in Fig. 4 which will be described later.

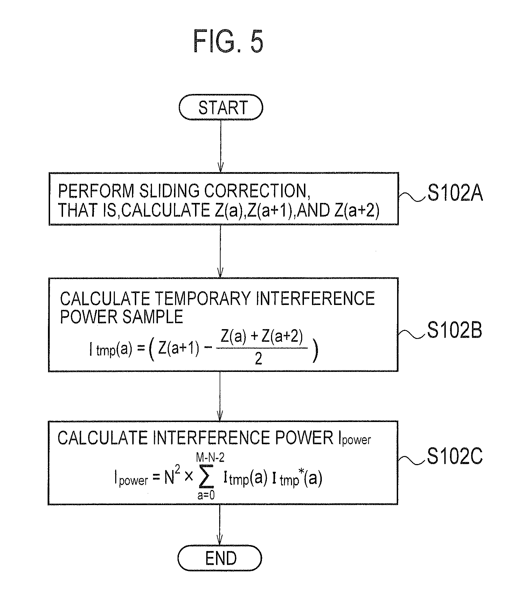

The interference power estimation unit 11C, for example, is configured to calculate interference power $I_{power}$ included in a received signal $r(n)$ of the SRS in the radio base station eNB by using a method illustrated in Fig. 5 which will be described later.

The reception quality estimation unit 11D is configured to calculate the reception quality (for example, SIR) of the SRS in the radio base station eNB in each subframe by using the received power $S_{power}$ calculated by the signal power estimation unit 11B and the interference power $I_{power}$ calculated by the interference power estimation unit 11C.

Here, the reception quality estimation unit 11D may be configured to calculate the SIR of the SRS in the radio base station eNB based on results obtained by performing an averaging process in the time direction (that is, an averaging process over a plurality of subframes) and averaging in the frequency direction (that is, an averaging process over a plurality of SRS transmission bands) with respect to the received power $S_{power}$ calculated by the signal power estimation unit 11B and the interference power $I_{power}$ calculated by the interference power estimation unit 11C.

Furthermore, the reception quality estimation unit 11D may also be configured to calculate the SIR of the SRS in the radio base station eNB based on results, which are obtained by performing the averaging process in the time direction (that is, the averaging process over the plurality of subframes) and the averaging in the frequency direction (that is, the averaging process over the plurality of SRS transmission bands) with respect to the interference power $I_{power}$ calculated by the interference power estimation unit 11C, and instantaneous received power $S_{power}$ calculated by the signal power estimation unit 11B at the reception timing of the SRS.

At this time, the instantaneous received power $S_{power}$ calculated by the signal power estimation unit 11B may also be obtained through the averaging in the frequency direction (that is, the averaging process over the plurality of SRS transmission bands).

The DRS reception unit 12A is configured to receive the DRS transmitted by the mobile station UE.

The signal power estimation unit 12B, for example, is configured to calculate the received power $S_{power}$ of the DRS transmitted by the mobile station UE by using the method illustrated in Fig. 4 which will be described later.

The interference power estimation unit 12C, for example, is configured to calculate the interference power $I_{power}$ included in a received signal $r(n)$ of the DRS in the radio base station eNB by using the method illustrated in Fig. 5 which will be described later.

The reception quality estimation unit 12D is configured to calculate the reception quality (for example, SIR) of the DRS in the radio base station eNB in each subframe by using the received power $S_{power}$ calculated by the signal power estimation unit 12B and the interference power $I_{power}$ calculated by the interference power estimation unit 12C.

Here, the reception quality estimation unit 12D may be configured to calculate the SIR of the DRS in the radio base station eNB based on results obtained by performing an averaging process in the time direction (that is, an averaging process over a plurality of subframes) and an averaging in the frequency direction (that is, an averaging process over a plurality of DRS transmission bands) with respect to the received power $S_{power}$ calculated by the signal power estimation unit 12B and the interference power $I_{power}$ calculated by the interference power estimation unit 12C.

Furthermore, the reception quality estimation unit 12D may also be configured to calculate the SIR of the DRS in the radio base station eNB based on results, which are obtained by performing the averaging process in the time direction (that is, the averaging process over the plurality of subframes) and the averaging in the frequency direction (that is, the averaging process over the plurality of DRS transmission bands) with respect to the interference power $I_{power}$ calculated by the interference power estimation unit 12C, and instantaneous received power $S_{power}$ calculated by the signal power estimation unit 12B at the reception timing of the DRS.

At this time, the instantaneous received power $S_{power}$ calculated by the signal power estimation unit 12C may also be obtained through the averaging in the frequency direction (that is, the averaging process over the plurality of DRS transmission bands).

The PUCCH reception unit 13A is configured to receive the uplink control signal transmitted by the mobile station UE through the PUCCH.

The signal power estimation unit 13B, for example, is configured to calculate the received power $S_{power}$ of the uplink control signal transmitted by the mobile station UE by using the method illustrated in Fig. 4 which will be described later.

The interference power estimation unit 13C, for example, is configured to calculate interference power $I_{power}$ included in a received signal r(n) of the uplink control signal in the radio base station eNB by using the method illustrated in Fig. 5 which will be described later.

The reception quality estimation unit 13D is configured to calculate the reception quality (for example, SIR) of the uplink control signal in the radio base station eNB in each subframe by using the received power $S_{power}$ calculated by the signal power estimation unit 13B and the interference power $I_{power}$ calculated by the interference power estimation unit 13C.

Here, the reception quality estimation unit 13D may be configured to calculate the SIR of the uplink control signal in the radio base station eNB based on results obtained by performing an averaging process in the time direction (that is, an averaging process over a plurality of subframes) and an averaging in the frequency direction (that is, an averaging process over a plurality of PUCCH transmission bands) with respect to the received power $S_{power}$ calculated by the signal power estimation unit 13B and the interference power $I_{power}$ calculated by the interference power estimation unit 13C.

Furthermore, the reception quality estimation unit 13D may also be configured to calculate the SIR of the uplink control signal in the radio base station eNB based on results, which are obtained by performing the averaging process in the time direction (that is, the averaging process over the plurality of subframes) and the averaging in the frequency direction (that is, the averaging process over the plurality of PUCCH transmission bands) with respect to the interference power $I_{power}$ calculated by the interference power estimation unit 13C, and instantaneous received power $S_{power}$ calculated by the signal power estimation unit 13B at the reception timing of the uplink control signal.

At this time, the instantaneous received power $S_{power}$ calculated by the signal power estimation unit 13C may also be obtained through the averaging (that is, the averaging process over the plurality of PUCCH transmission bands) in the frequency direction.

The scheduling processing unit 14 is configured to perform a predetermined control process, that is, a time and frequency scheduling process, an AMC (Adaptive Modulation and channel Coding) process (a process of selecting a modulation scheme and a coding rate) and the like based on the SIRs in the radio base station eNB, which have been calculated by the reception quality estimation unit 11D and the reception quality estimation unit 12D.

The TPC command generation unit 15 is configured to perform a predetermined control process, that is, an uplink transmission power control process (for example, a TPC command generation process and a transmission process to the mobile station UE through the PDCCH) based on the SIRs in the radio base station eNB, which have been calculated by the reception quality estimation unit 11D, the reception quality estimation unit 12D, and the reception quality estimation unit 13D.

(Operation of the mobile communication system according to the first embodiment of the present invention)

With reference to Fig. 3 to Fig. 5, the operation of the mobile communication system according to the first embodiment of the present invention, specifically, the operation of the radio base station eNB according to the first embodiment of the present invention will be described.

As illustrated in Fig. 3, in step S101, the radio base station eNB estimates the received power $S_{power}$ of the SRS, the DRS, or the uplink control signal transmitted by the mobile station UE. Hereinafter, with reference to Fig. 4, a method for estimating the received power Spower using the SRS will be described.

As illustrated in Fig. 4, for example, the signal power estimation unit 11B of the radio base station eNB calculates a correlation value Z(a) between a predetermined number N of continuous samples "a" to "a+N-1" in sequences constituting a transmitted signal $X_L(n)$ of the SRS transmitted by a mobile station UE#L and a predetermined number N of continuous samples "a" to "a+N-1" in sequences constituting a received signal r(n) of the SRS in the radio base station eNB, in step S101A, and calculates the received power $S_{power}$ of the SRS using the correlation value Z(a) in step S101B.

Specifically, the received signal r(n) of the SRS is expressed by:

[Math. 1]

$$r(n) = \sum_{k=0}^{K-1} X_k(n)H_k(n) + N(n)$$

Math. 1 above.

Herein, the "n" denotes a parameter having an integer value in the range of "0" to "M", and the "M" denotes the length of sequences constituting the SRS. Furthermore, the "$X_k(n)$" denotes the transmitted signal of the SRS on a frequency domain, which has been transmitted by a mobile station UE#k, the "$H_k(n)$" denotes a propagation path state between the mobile station UE#k and the radio base station eNB, that is, a frequency response, and the "N(n)" denotes interference power received in the radio base station eNB.

Here, the interference power is the sum of thermal noise added in the radio base station eNB and interference power from another cell. Moreover, the "K" denotes the number of mobile stations UEs multiplexed to the SRS in a corresponding subframe, and "$K \leq N_{MAX}$" is satisfied. In addition, it is assumed that a dispersion of the "N(n)" is "$\sigma^2$".

Here, the signal power estimation unit 11B may be configured to use the following Math. of:

[Math. 2]

$$Z(a) = \frac{1}{N} \sum_{n=a}^{a+N-1} r(n)X_L^*(n)$$

- (Equation 1)

so as to calculate the correlation value Z(a).

[Math. 3]

$$S_{power} = |Z(a)|^2$$

- (Equation 2)

By using the above Equations, the signal power estimation unit 11E may be configured to calculate the received power $S_{power}$ of the SRS.

Hereinafter, the reason for calculating the received power $S_{power}$ of the SRS by (Equation 1) and (Equation 2) above will be described.

Firstly, it is assumed that the received power of the SRS transmitted by a mobile station UE#L is calculated.

In such a case, since sequences "X(n)" constituting SRS transmitted by each mobile station UE have been already known, in order to assign sequences constituting SRS to be transmitted, the transmission timing of the SRS, or the transmission frequency of the SRS to each mobile station UE, the radio base station eNB calculates the correlation value Z(a) using the sequences "$X_L(n)$" constituting the SRS transmitted by the mobile station UE#L as follows.

[Math. 4]

$$Z(a) = \frac{1}{N} \sum_{n=a}^{a+N-1} r(n) X_L^*(n)$$

$$= \frac{1}{N} \sum_{n=a}^{a+N-1} \left( \sum_{k=0}^{K-1} X_k(n) H_k(n) + N(n) \right) X_L^*(n)$$

$$= \frac{1}{N} \sum_{n=a}^{a+N-1} |X_L(n)|^2 H_L(n) + \frac{1}{N} \sum_{n=a}^{a+N-1} \sum_{k=0, k \neq L}^{K-1} X_k(n) H_k(n) X_L^*(n)$$

$$+ \frac{1}{N} \sum_{n=a}^{a+N-1} N(n) X_L^*(n)$$

- (Equation 3)

Herein, the "Z(a)" denotes a correlation value between the "$X_L(n)$" and the "r(n)" over continuous N samples when starting from a sample "a" in the sequences.

A first term of the "Z(a)" expressed by (Equation 3) is equivalent to an estimation value of a propagation path state between the mobile station UE#L and the radio base station eNB, and denotes a received power component of the SRS transmitted by the mobile station UE#L.

Furthermore, a second term of the "Z(a)" expressed by (Equation 3) denotes an interference power component from mobile stations UEs other than mobile stations UE#L multiplexed to the same SRS in the same cell. Moreover, a third term of the "Z(a)" expressed by (Equation 3) denotes an interference power component from another cell.

Here, for simplification, if it is assumed that a frequency response is constant, that is, is coherent in arbitrary N samples, the N frequency response samples "n=a, a+1, ..., a+N-1" are equal to one another. The frequency response is set as "$H_L(n) = H'$".

In such a case, since it is possible to ignore the collapse of orthogonality when performing multiplexing through a cyclic shift caused by a variation in the frequency response, all sequences generated by performing the cyclic shift with respect to the CAZAC sequence are orthogonal to one another, so that the second term of the "Z(a)" expressed by (Equation 3) is ideally "0".

Furthermore, when the number N of the samples is sufficiently large, the third term of the "Z(a)" expressed by (Equation 3) is ideally "0" because the "N(n)" denoting a noise component is suppressed by an averaging effect. Actually, the third term of the "Z(a)" expressed by (Equation 3) is not "0". However, since the third term of the "Z(a)" expressed by (Equation 3) is sufficiently small as compared with the first term of the "Z(a)" expressed by (Equation 3), which indicates the received power component of the SRS, it is possible to ignore the third term.

Consequently, ideally, it is possible to simplify the "Z(a)" expressed by (Equation 3) as follows.

[Math. 5]

$$Z(a) \approx \frac{1}{N} \sum_{n=a}^{a+N-1} |X_L(n)|^2 H_L(n) = H_L'$$

In this case, it is assumed that a square value of amplitude values of samples constituting the CAZAC sequence is "1".

Consequently, it is possible to calculate the received power $S_{power}$ of the SRS as follows.

[Math. 6]

$$S_{power} = |Z(a)|^2 \approx |H_L'|^2$$

In this case, as long as the number N of the samples is an integer times of the maximum number $N_{MAX}$ to be multiplexed by the cyclic shift, it is possible to use an arbitrary value. Consequently, if "N = $N_{MAX}$", since a minimum average interval is obtained, it is possible to calculate the received power $S_{power}$ of the SRS over a small frequency bandwidth. If "N = M", since an average interval over all sequences is obtained, it is possible to calculate the received power $S_{power}$ of the SRS over a large frequency bandwidth. Thus, it is possible to appropriately use the number N of the samples according to the use of SIR to be calculated.

For example, when the length of the sequence of the SRS is "120", since the SRS is mapped in the frequency direction every one subcarrier, it is possible to calculate the received power $S_{power}$ of the SRS over 20 RBs (Resource Blocks) at maximum.

Here, it is assumed that the SRS has been mapped over RBs #2 to #21 except for the first and last RBs.

In such a case, when calculating the Z(a), if "a = 0" and "N = 24", it is possible to calculate the received power $S_{power}$ of the SRS over 4 RBs of RBs #2 to #5. When calculating the Z(a), if "a = 24" and "N = 24", it is possible to calculate the received power $S_{power}$ of the SRS over 4 RBs of RBs #6 to #9. When calculating the Z(a), if "a = 48" and "N = 24", it is possible to calculate the received power $S_{power}$ of the SRS over 4 RBs of RBs #10 to #13. When calculating the Z(a), if "a = 72" and "N = 24", it is possible to calculate the received power $S_{power}$ of the SRS over 4 RBs of RBs #14 to #17. When calculating the Z(a), if "a = 96" and "N = 24", it is possible to calculate the received power $S_{poWer}$ of the SRS over 4 RBs of RBs #18 to #21.

Meanwhile, when calculating the Z(a), if "a = 0" and "N = 120", it is possible to calculate the received power $S_{power}$ of the SRS over a wide band of RBs #2 to #21.

The signal power estimation unit 12B of the radio base station eNB may also be configured to calculate the received power $S_{power}$ of the DRS in the same manner as that of the above-mentioned signal power estimation unit 11B.

Furthermore, the signal power estimation unit 13B of the radio base station eNB may also be configured to calculate the received power $S_{power}$ of the uplink control signal in the same manner as that of the above-mentioned signal power estimation unit 11B.

In step S102, the radio base station eNB estimates the interference power $I_{power}$ included in the received signal s r(n) of the SRS, the DRS, and the uplink control signal in the radio base station eNB. Hereinafter, with reference to Fig. 5, a method for estimating the interference power $I_{power}$ using the SRS will be described.

As illustrated in Fig. 5, for example, in step S102A, the interference power estimation unit 11C of the radio base station eNB performs sliding correlation, that is, allows a head sample "a" in the above-mentioned predetermined number N of continuous samples to slide, thereby calculating Z(a), Z(a+1), and Z(a+2).

Here, the Z(a), the Z(a+1), and the Z(a+2) are calculated as follows.

[Math. 7]

$$
\begin{aligned}
Z(a) &= \frac{1}{N} \sum_{n=a}^{a+N-1} r(n) X_L^*(n) = S(a) \frac{1}{N} \sum_{n=a}^{a+N-1} N(n) X_L^*(n) \\
Z(a+1) &= \frac{1}{N} \sum_{n=(a+1)}^{(a+1)+N-1} r(n) X_L^*(n) = S(a+1) \frac{1}{N} \sum_{n=(a+1)}^{(a+1)+N-1} N(n) X_L^*(n) \\
Z(a+2) &= \frac{1}{N} \sum_{n=(a+2)}^{(a+2)+N-1} r(n) X_L^*(n) = S(a+2) \frac{1}{N} \sum_{n=(a+2)}^{(a+2)+N-1} N(n) X_L^*(n)
\end{aligned}
\Biggr\} \quad \text{- (Equation 4)}
$$

Here, it is assumed that orthogonally through the cyclic shift can be ideally achieved and a received power component from a mobile station UE other than the desired mobile station UE#L can be completely removed. In such a case, desired interference power $I_{power}$ is dispersion $\sigma^2$ of the N(n). The S(a), the S(a+1), and the S(a+2) are the received power components of ideal SRS in such a case and are expressed by Math. 8 below.

[Math. 8]

$$S(a) = \frac{1}{N}\sum_{n=a}^{a+N-1}|X_L(n)|^2 H_L(n) = H_L'$$

$$S(a+1) = \frac{1}{N}\sum_{n=(a+1)}^{(a+1)+N-1}|X_L(n)|^2 H_L(n) = H_L'$$

$$S(a+2) = \frac{1}{N}\sum_{n=(a+2)}^{(a+2)+N-1}|X_L(n)|^2 H_L(n) = H_L'$$

In step S102B, the interference power estimation unit 11C of the radio base station eNB calculates a plurality of interference power samples $I_{tmp}(a)$ using the Z(a), the Z(a+1), and the Z(a+2) as expressed by (Equation 5) bellow.

[Math. 9]

$$I_{tmp}(a) = \left( Z(a+1) - \frac{Z(a)+Z(a+2)}{2} \right)$$

- (Equation 5)

Hereinafter, the reason for calculating the interference power samples $I_{tmp}(a)$ will be described by (Equation 5) above.

In (Equation 4), a first term denotes the received power component of the SRS transmitted by the mobile station UE#L and a second term denotes interference power component to be calculated.

For example, when frequency responses of adjacent subcarriers are equal to each other, that is, a frequency change is small, since it is possible to understand that the S(a) and the S(a+1) are approximately equal to each other, it is understood that it possible to calculate the above-mentioned interference power component using the difference between the Z(a) and the Z(a+1).

However, since some frequency change actually exists, an average value of the Z(a) and the Z(a+2), that is, an intermediate value of the Z(a) and the Z(a+1) is subtracted from the Z(a+1) as expressed by (Equation 5), so that it is possible to accurately remove the received power component of the SRS transmitted by the mobile station UE#L and to calculate the interference power samples $I_{tmp}(a)$.

In step S102C, as expressed by (Equation 6), the interference power estimation unit 11C of the radio base station eNB performs an averaging process with respect to the plurality of interference power samples $I_{tmp}(a)$, thereby calculating the interference power $I_{power}$ included in the received signal r(n) of a predetermined signal in the radio base station eNB.

[Math. 10]

$$I_{power} = N^2 \times \sum_{a=0}^{M+N-2} I_{tmp}(a) I_{tmp}^*(a)$$

- (Equation 6)

Hereinafter, the reason for calculating the interference power $I_{power}$ by (Equation 6) above will be described.

When paying attention to the S(a), the S(a+1), and the S(a+2) which are ideal received power components appearing when calculating the plurality of interference power samples $I_{tmp}(a)$, the S(a), the S(a+1), and the S(a+2) denote average values of frequency response components over the N samples. Thus, when a frequency change is sufficiently small between the S(a) and the S(a+1), that is, is coherent, since all the N frequency response samples "n = a, a+1, ..., a+N-1" are equal to one another, a relation of "S(a) ≒ S(a+1)" is satisfied. Furthermore, in the same manner, a relation of "S(a+1) ≒ S(a+2)" is also satisfied.

Consequently, by using the above relations, it is possible to expand the above-mentioned (Equation 5) as follows.

[Math. 11]

$$I_{tmp}(a) = \frac{1}{N} \left( -\frac{N(a)X_L^*(a)}{2} + \frac{N(a+1)X_L^*(a+1)}{2} + \frac{N(a+2+N-2)X_L^*(a+2+N-2)}{2} \right.$$
$$\left. -\frac{N(a+2+N-1)X_L^*(a+2+N-1)}{2} \right)$$

(Equation 7)

In one interference power sample $I_{tmp}(a)$, since the number of samples is small and an error is also increased, the interference power estimation unit 11C of the radio base station eNB performs the sliding correlation, that is, allows the head sample "a" in the above-mentioned predetermined number N of continuous samples to slide, thereby calculating the plurality of interference power samples $I_{tmp}(a)$ (a = 0, 1, ..., M-N-2), and performs an ensemble averaging process with respect to the plurality of interference power samples $I_{tmp}(a)$, thereby calculating the above-mentioned interference power $I_{power}$.

As expressed by (Equation 6) above, since the "$I_{tmp}(a)$" is a complex signal of an interference component, a complex conjugate "$I_{tmp}(a)^*$" of the "$I_{tmp}(a)$" is multiplied to the "$I_{tmp}(a)$", so that a component corresponding to power is calculated.

In addition, (Equation 6) above can be expanded as (Equation 7) below.

[Math. 12]

$$I_{power} = N^2 \times \sum_{a=0}^{M-N-2} I_{tmp}(a) I_{tmp}^*(a)$$
$$= N^2 \times E\left[ I_{tmp}(a) I_{tmp}^*(a) \right]$$
$$= N^2 \times \left( \frac{\sigma^2}{4N^2} + \frac{\sigma^2}{4N^2} + \frac{\sigma^2}{4N^2} + \frac{\sigma^2}{4N^2} \right)$$
$$= \sigma^2$$

- (Equation 8)

In this case, the E[ ] denotes an operation of the ensemble averaging process, and it is assumed that a power value of the "$X_L(n)$", which is the CAZAC sequence, is "1" in the operation of the ensemble averaging process.

In addition, in (Equation 7) above, since a coefficient of (1/N) exists, when the complex conjugate "$I_{tmp}(a)^*$" of the "$I_{tmp}(a)$" is multiplied to the "$I_{tmp}(a)$" as expressed by (Equation 8) above, a coefficient of $(1/N)^2$ exists in (Equation 8) above. Here, since interference power $I_{power}$ to be calculated is "$\sigma^2$" which indicates an interference component, it is necessary to multiply the "$N^2$" in (Equation 8) above in order to deny the effect of the coefficient of $(1/N)^2$.

Furthermore, for the "N(a)", it is assumed to use the Gaussian average in which an average value is "0" and a dispersion value is "$\sigma^2$". Thus, relations of "$E[N(x) \times N(y)] = \sigma^2$ (x = y)" and "$E[N(x) \times N(y)] = 0$ (x ≠ y)" are satisfied. By using these relations, deployment from the second row to the third row of (Equation 8) above is possible.

The interference power estimation unit 12C of the radio base station eNB may also be configured to calculate the interference power $I_{power}$ included in the received signal r(n) of the DRS in the same manner as that of the above-mentioned interference power estimation unit 11C.

Furthermore, the interference power estimation unit 13C of the radio base station eNB may also be configured to calculate the interference power $I_{power}$ included in the received signal r(n) of the uplink control signal in the same manner as that of the above-mentioned interference power estimation unit 11C.

The reception quality estimation unit 11D of the radio base station eNB performs an averaging process in the time direction and the frequency direction with respect to the received power $S_{power}$ calculated by the signal power estimation unit 11B and the interference power $I_{power}$ calculated by the interference power estimation unit 11C in step S103, and calculates the reception quality (for example, SIR) of the SRS in the radio base station eNB based on a result of the averaging process in step S104.

Furthermore, the reception quality estimation unit 12D of the radio base station eNB performs an averaging process in the time direction and the frequency direction with respect to the received power $S_{power}$ calculated by the signal power estimation unit 12B and the interference power $I_{power}$ calculated by the interference power estimation unit 12C in step S103, and calculates the reception quality (for example, SIR) of the DRS in the radio base station eNB based on a result of the averaging process in step S104.

In the same manner, the reception quality estimation unit 13D of the radio base station eNB performs an averaging process in the time direction $I_{tmp}(a)$ with respect to the received power $S_{power}$ calculated by the signal power estimation unit 13B and the interference power $I_{power}$ calculated by the interference power estimation unit 13C in step S103, and calculates the reception quality (for example, SIR) of the uplink control signal in the radio base station eNB based on a result of the averaging process in step S104.

(Operation and Effect of the mobile communication system according to the first embodiment of the present invention)

Through the cyclic shift, a plurality of mobile stations UEs are orthogonally multiplexed to the SRS, the DRS, or the uplink control signal transmitted through the PUCCH. Thus, if it is not possible to suppress interference (inter-code interference among mobile stations UEs) in an own cell, since the radio base station eNB may observe interference power larger than actual interference power, it is not possible to accurately perform a predetermined control process.

In order to solve the above problem, in accordance with the mobile communication system according to the first embodiment of the present invention, a plurality of interference power samples "$I_{tmp}(a)$", in which interference due to the multiplexing of the CAZAC sequence in an own cell has been suppressed, are generated through sliding correlation, and an averaging effect is improved using the plurality of interference power samples "$I_{tmp}(a)$", so that it is possible to improve the accuracy of estimation of interference power $I_{power}$ from another cell.

Furthermore, in accordance with the mobile communication system according to the first embodiment of the present invention, it is possible to suppress the influence of interference among mobile stations UEs in an own cell, estimate the received power $S_{power}$ of the SRS with a high accuracy, and estimate the interference power $I_{power}$ from another cell with a high accuracy, so that it is possible to improve the accuracy of a time and frequency scheduling process, an AMC process, a TPC process and the like, resulting in the improvement of system performance.

Furthermore, in accordance with the mobile communication system according to the first embodiment of the present invention, it is possible to estimate the SIR of the SRS with a high accuracy, so that it is possible to determine whether the mobile station UE transmits the SRS, with a high accuracy.

For example, when the setting of the SRS has been changed by "RRC Reconfiguration" and the like, if reflection is not sufficient due to processing delay of the mobile station UE, it is possible for the radio base station eNB to determine with reference to the above-described SIR that the mobile station UE does not transmit the SRS, or a change in the setting has not been reflected.

Furthermore, when "Multi-user MIMO" has been applied, the DRS is multiplexed among mobile stations UEs. However, in accordance with the mobile communication system according to the first embodiment of the present invention, it is possible to estimate the SIR of the DRS with a high accuracy, so that it is possible to improve the accuracy of an AMC process, a TPC process and the like, resulting in the improvement of system performance.

In accordance with the mobile communication system according to the first embodiment of the present invention, it is possible to estimate the SIR of the uplink control signal transmitted through the PUCCH with a high accuracy, so that it is possible to improve the accuracy of a TPC process and the like, resulting in the improvement of system performance.

Furthermore, in accordance with the mobile communication system according to the first embodiment of the present invention, it is possible for the radio base station eNB to perform ternary value determination of transmission acknowledgement information (ACK/NACK/DTX) transmitted through the PUCCH with a high accuracy.

The characteristics of the present embodiment described above may be expressed as follows.

A first characteristic of the present embodiment is summarized in that a radio base station eNB, which is configured to receive a predetermined signal (SRS, DRS, a PUCCH signal and the like) formed using a CAZAC sequence (a predetermined sequence having a constant amplitude on a time domain and a frequency domain and a self-correlation of 0) from a mobile station UE#L, includes: the signal power estimation units 11B, 12B, and 13B configured to calculate a correlation value Z(a) between a predetermined number N of continuous samples "a" to "a+N-1" in sequences constituting a transmitted signal $X_L(n)$ of the predetermined signal transmitted by the mobile station UE#L and a predetermined number N of continuous samples "a" to "a+N-1" in sequences constituting a received signal r(n) of the predetermined signal in the radio base station eNB, and calculate the received power $S_{power}$ of the predetermined signal using the correlation value Z(a).

In the first characteristic of the present embodiment, the signal power estimation units 11B, 12B, and 13B may be configured to use the following Math. 13 of:

[Math. 13]

$$Z(a) = \frac{1}{N} \sum_{n=a}^{a+N-1} r(n) X_L^*(n)$$

so as to calculate the correlation value Z(a), and to use the following Math. 14 of:

[Math. 14]

$$S_{power} = \left| Z(a) \right|^2$$

so as to calculate the received power $S_{power}$ of a predetermined signal.

In the first characteristic of the present embodiment, the radio base station eNB may also include: the interference power estimation units 11C, 12C, and 13C configured to allow a head sample "a" in the predetermined number N of continuous samples to slide, thereby calculating a plurality of interference power samples $I_{tmp}(a)$, and to perform an averaging process with respect to the interference power samples $I_{tmp}(a)$, thereby calculating interference power $I_{power}$ included in the received signal r(n) of the predetermined signal in the radio base station eNB.

In the first characteristic of the present embodiment, the interference power estimation units 11C, 12C, and 13C may be configured to use the following Math. 15 of:

[Math. 15]

$$I_{tmp}(a) = \left( Z(a+1) - \frac{Z(a)+Z(a+2)}{2} \right)$$

so as to calculate the above-described plurality of interference power samples $I_{tmp}(a)$, and to use the following Math. 16 of:

[Math. 16]

$$I_{power} = N^2 \times \sum_{a=0}^{M-N-2} I_{tmp}(a) I_{tmp}^*(a)$$

so as to calculate the above-described interference power $I_{power}$.

In the first characteristic of the present embodiment, the radio base station eNB may also include: reception quality estimation units 11D, 12D, and 13D configured to calculate the reception quality (for example, SIR) of the predetermined signal in the radio base station eNB by using the received power $S_{power}$ calculated by the signal power estimation units 11B, 12B, and 13B and the interference power $I_{power}$ calculated by the interference power estimation units 11C, 12C, and 13C; and a scheduling processing unit 14 and a TPC command generation unit 15 configured to perform a predetermined control process (for example, a scheduling process, a selection process of a modulation scheme and a coding rate, or an uplink transmission power control process) based on the reception quality.

In the first characteristic of the present embodiment, the reception quality estimation units 11D, 12D, and 13D may be configured to calculate the reception quality in the radio base station eNB based on results obtained by performing an averaging process in the time direction and the frequency direction with respect to the received power $S_{power}$ calculated by the signal power estimation units 11B, 12B, and 13B and the interference power $I_{power}$ calculated by the interference power estimation units 11C, 12C, and 13C.

It is noted that the operation of the above-described the radio base station eNB or the mobile station UE may be implemented by a hardware, may also be implemented by a software module executed by a processor, and may further be implemented by the combination of the both.

The software module may be arranged in a storage medium of an arbitrary format such as RAM(Random Access Memory), a flash memory, ROM (Read Only Memory), EPROM (Erasable Programmable ROM), EEPROM (Electronically Erasable and Programmable ROM), a register, a hard disk, a removable disk, and CD-ROM.

The storage medium is connected to the processor so that the processor can write and read information into and from the storage medium. Such a storage medium may also be accumulated in the processor. The storage medium and processor may be arranged in ASIC. Such the ASIC may be arranged in the radio base station eNB or the mobile station UE. Further, such a storage medium or a processor may be arranged, as a discrete component, in the radio base station eNB or the mobile station UE.

Thus, the present invention has been explained in detail by using the above-described embodiments; however, it is obvious that for persons skilled in the art, the present invention is not limited to the embodiments explained herein. The present invention can be implemented as a corrected and modified mode without departing from the gist and the scope of the present invention defined by the claims. Therefore, the description of the specification is intended for explaining the example only and does not impose any limited meaning to the present invention.

Industrial Applicability

As described above, in accordance with the present invention, it is possible to provide a radio base station capable of estimating the reception quality in a radio base station eNB with a high accuracy by using a reference signal.

**Claims**

1. A radio base station, which is configured to receive a predetermined signal formed using a predetermined sequence from a mobile station, the predetermined sequence having a constant amplitude on a time domain and a frequency domain and a self-correlation of 0, comprising:

   a signal power estimation unit configured to calculate a correlation value between a predetermined number of continuous samples in a sequence constituting a transmitted signal of the predetermined signal transmitted by the mobile station and a predetermined number of continuous samples in a sequence constituting a received signal of the predetermined signal in the radio base station, and to calculate received power of the predetermined signal using the correlation value.

2. The radio base station according to claim 1, wherein
   the signal power estimation unit is configured to use Math. A of:

$$[\text{Math. A}]$$

$$Z(a) = \frac{1}{N} \sum_{n=a}^{a+N-1} r(n)X_L^*(n)$$

where r(n): the received signal of the predetermined signal,
$X_L(n)$: the transmitted signal of the predetermined signal,
N: the predetermined number,
Z(a): the correlation value, and
a: a start position of the predetermined number of samples in the predetermined sequence
so as to calculate the correlation value, and to use Math. B of:

[Math. B]

$$S_{power} = |Z(a)|^2$$

where $S_{power}$: the received power of the predetermined signal so as to calculate the received power of the predetermined signal.

3. The radio base station according to claim 1 or 2, comprising: an interference power estimation unit configured to allow a head sample in the predetermined number of continuous samples to slide, thereby calculating a plurality of interference power samples, and to perform an averaging process with respect to the interference power samples, thereby calculating interference power included in the received signal of the predetermined signal in the radio base station.

4. The radio base station according to claim 3, wherein
the interference power estimation unit is configured to use Math. C of:

[Math. C]

$$I_{tmp}(a) = \left( Z(a+1) - \frac{Z(a)+Z(a+2)}{2} \right)$$

where $I_{tmp}(a)$: the interference power samples so as to calculate the plurality of interference power samples, and to use Math. D of:

[Math. D]

$$I_{power} = N^2 \times \sum_{a=0}^{M-N-2} I_{tmp}(a) I_{tmp}^*(a)$$

where M: the length of the predetermined sequence so as to calculate the interference power.

5. The radio base station according to claim 3 or 4, comprising:

   a reception quality estimation unit configured to calculate reception quality of the predetermined signal in the radio base station by using the repletion power calculated by the signal power estimation unit and the interference power calculated by the interference power estimation unit; and
   a predetermined control processing unit configured to perform a predetermined control process based on the reception quality.

6. The radio base station according to claim 5, wherein the reception quality estimation unit is configured to calculate the reception quality based on a result obtained by performing an averaging process in a time direction and a frequency direction with respect to the received power calculated by the signal power estimation unit and the interference power calculated by the interference power estimation unit.

7. The radio base station according to any one of claims 1 to 6, wherein the predetermined signal includes at least one of a sounding reference signal, a demodulation reference signal, and an uplink control signal transmitted through a physical uplink control channel.

8. The radio base station according to any one of claims 1 to 7, wherein the predetermined control processing unit is configured to perform at least one of a scheduling process, a selection process of a modulation scheme and a coding rate, and an uplink transmission power control process with respect to the mobile station.

# FIG. 1

RADIO BASE STATION eNB

PDCCH

PUCCH(ACK/NACK,CQI)
SRS
DRS

MOBILE STATION UE

## FIG. 2

RS RECEPTION UNIT — 11A

SIGNAL POWER ESTIMATION UNIT — 11B

INTERFERENCE POWER ESTIMATION UNIT — 11C

RECEPTION QUALITY ESTIMATION UNIT — 11D

DRS RECEPTION UNIT — 12A

SIGNAL POWER ESTIMATION UNIT — 12B

INTERFERENCE POWER ESTIMATION UNIT — 12C

RECEPTION QUALITY ESTIMATION UNIT — 12D

PUCCH RECEPTION UNIT — 13A

SIGNAL POWER ESTIMATION UNIT — 13B

INTERFERENCE POWER ESTIMATION UNIT — 13C

RECEPTION QUALITY ESTIMATION UNIT — 13D

RADIO BASE STATION eNB

SCHEDULING PROCESSING UNIT — 14

TPC COMMAND GENERATION UNIT — 15

NOTIFY MOBILE STATION UE THROUGH PDCCH

EP 2 503 817 A1

## FIG. 3

```
( START )
   │
   ▼
┌─────────────────────────────┐
│  ESTIMATE RECEIVED POWER    │──── S101
└─────────────────────────────┘
   │
   ▼
┌─────────────────────────────┐
│ ESTIMATE INTERFERENCE POWER │──── S102
└─────────────────────────────┘
   │
   ▼
┌─────────────────────────────┐
│  AVERAGE TIME DIRECTION     │──── S103
│  AND FREQUENCY DIRECTION    │
└─────────────────────────────┘
   │
   ▼
┌─────────────────────────────┐
│       ESTIMATE SIR          │──── S104
└─────────────────────────────┘
   │
   ▼
(  END  )
```

## FIG. 4

```
( START )
   │
   ▼
```

CALCULATE CORRELATION VALUE Z(a) (CORRELATION VALUE Z(a) OVER CONTINUOUS N SAMPLES FROM SAMPLE a) BETWEEN TRANSMISSION SIGNAL $X_L(n)$ OF SRS TRANSMITTED BY MOBILE STATION UE#L AND RECEPTION SIGNAL r(n) OF SRS IN RADIO BASE STATION eNB

$$Z(a) = \frac{1}{N} \sum_{n=a}^{a+N-1} r(n) X_L^*(n)$$

──── S101A

CALCULATE SIGNAL POWER $S_{power}$ BY USING CORRELATION VALUE Z(a)

$$S_{power} = |Z(a)|^2$$

──── S101B

```
   │
   ▼
(  END  )
```

# FIG. 5

START

PERFORM SLIDING CORRECTION,
THAT IS, CALCULATE Z(a), Z(a+1), AND Z(a+2) ～S102A

CALCULATE TEMPORARY INTERFERENCE
POWER SAMPLE

$$I_{tmp}(a) = \left( Z(a+1) - \frac{Z(a) + Z(a+2)}{2} \right)$$ ～S102B

CALCULATE INTERFERENCE POWER $I_{power}$

$$I_{power} = N^2 \times \sum_{a=0}^{M-N-2} I_{tmp}(a) \, I_{tmp}^{*}(a)$$ ～S102C

END

## INTERNATIONAL SEARCH REPORT

| International application No. |
|---|
| PCT/JP2010/070201 |

### A. CLASSIFICATION OF SUBJECT MATTER
*H04W24/08*(2009.01)i, *H04B1/707*(2006.01)i, *H04W88/08*(2009.01)i

According to International Patent Classification (IPC) or to both national classification and IPC

### B. FIELDS SEARCHED

Minimum documentation searched (classification system followed by classification symbols)
H04W4/00-99/00, H04B1/69-1/713

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2010 |
| Kokai Jitsuyo Shinan Koho | 1971-2010 | Toroku Jitsuyo Shinan Koho | 1994-2010 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X<br>A | JP 2005-328311 A  (NTT Docomo Inc.),<br>24 November 2005 (24.11.2005),<br>paragraphs [0024] to [0025]<br>& US 2005/0259721 A1    & US 2008/0253432 A1<br>& EP 1596502 A2         & KR 10-2006-0047917 A<br>& CN 1697428 A | 1,2,7,8<br>3-6 |
| A | JP 2002-246958 A  (Mitsubishi Electric Corp.),<br>30 August 2002 (30.08.2002),<br>paragraphs [0069] to [0073]<br>& US 2004/0076172 A1    & EP 1367752 A1<br>& WO 2002/067478 A1 | 1-8 |

☐ Further documents are listed in the continuation of Box C.  ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 02 December, 2010 (02.12.10) | 14 December, 2010 (14.12.10) |

| Name and mailing address of the ISA/ | Authorized officer |
|---|---|
| Japanese Patent Office | |
| Facsimile No. | Telephone No. |

Form PCT/ISA/210 (second sheet) (July 2009)